# EUROPEAN PATENT APPLICATION

(11) **EP 4 394 467 A1**
(43) Date of publication of application: **03.07.2024**
(21) Application number: 22861251.1
(22) Date of filing: 19.08.2022
(51) Int. Cl.: G02B 6/42

(54) **OPTICAL MODULE AND OPTICAL COMMUNICATION DEVICE**

(30) Priority: 27.08.2021 JP 2021138893
(71) Applicant: Kyocera Corporation, Kyoto-shi Kyoto 612-8501 (JP)
(72) Inventor: AKAHOSHI, Tomoyuki, Kyoto-shi, Kyoto 612-8501 (JP); YAMAMOTO, Takashi, Kyoto-shi, Kyoto 612-8501 (JP); TSUJINO, Saki, Kyoto-shi, Kyoto 612-8501 (JP)
(74) Representative: Viering, Jentschura & Partner mbB Patent- und Rechtsanwälte
(86) International application number: PCT/JP2022/031300
(87) International publication number: WO 2023/026963

(57) **Abstract**

Multiple optical ICs (7) are mounted on a first mounting surface (5a) of a module substrate (5) at different positions in a first direction (y direction) from each other and are configured to perform photoelectric conversion. Multiple fiber bundles (9) each include multiple optical fibers (23) extending in parallel with each other and extend out from the multiple optical ICs toward a first side in a second direction (x direction). Multiple optical connectors (11) are located at opposite ends of the multiple fiber bundles from the multiple optical ICs, are connected to external optical elements, and allow transmission of optical signals. At least one control IC (13) is mounted on the module substrate and is configured to control at least one of the multiple optical ICs. At least one power supply IC (15) is mounted on the module substrate and is configured to supply power to at least one of the multiple optical ICs.

## Description

### TECHNICAL FIELD

The present disclosure relates to an optical module that performs at least one of conversion from an optical signal to an electrical signal or conversion from an electrical signal to an optical signal, and relates to an optical communication device including the optical module.

### BACKGROUND OF INVENTION

Known devices perform conversion between optical signals and electrical signals (e.g., below-listed Patent Literature 1). In Patent Literature 1, multiple optical communication devices are attached to a host circuit board. Each optical communication device is configured to be capable of being input with and/or outputting multi-channel optical signals. Thus, in Patent Literature 1, optical signals can be transmitted in a number of channels equal to the number of channels of each optical communication device multiplied by the number of optical communication devices using a single host circuit board. Each optical communication device is attached to the host circuit board using a connector.

### CITATION LIST

### PATENT LITERATURE

Patent Literature 1: Japanese Unexamined Patent Application Publication No. 2003-98392

### SUMMARY

In an aspect of the present disclosure, an optical module includes a module substrate, multiple optical ICs, multiple fiber bundles, multiple optical connectors, at least one control IC, and at least one power supply IC. The module substrate has a first surface that extends in a first direction and in a second direction perpendicular to the first direction. The multiple optical ICs are mounted on the first surface at different positions from each other in the first direction and are configured to perform photoelectric conversion. The multiple fiber bundles each include multiple optical fibers extending in parallel with each other. Each of the fiber bundles extends out from a corresponding one of the multiple optical ICs toward a first side in the second direction. The multiple optical connectors are located at opposite ends of the multiple fiber bundles from the multiple optical ICs, are connected to external optical elements, and allow transmission of optical signals. The at least one control IC is mounted on the module substrate and is configured to control at least one of the multiple optical ICs. The at least one power supply IC is mounted on the module substrate and is configured to supply power to at least one of the multiple optical ICs.

In an aspect of the present disclosure, an optical communication device includes the optical module and a motherboard electrically connected to the optical module.

### BRIEF DESCRIPTION OF THE DRAWINGS

FIG. 1 is an exploded perspective view of an optical module according to an embodiment of the present disclosure.
FIG. 2 is exploded perspective view of the optical module in FIG. 1 from a different direction from FIG. 1.
FIG. 3 is a schematic diagram illustrating an example of the configuration of a signal processing system of part of the optical module in FIG. 1.
FIG 4A is a schematic plan view illustrating another example of the arrangement of multiple optical ICs included in an optical module.
FIG. 4B is a schematic plan view illustrating yet another example of the arrangement of multiple optical ICs included in an optical module.
FIG. 5 is a schematic plan view illustrating another example of the configuration of a signal processing system of an optical module.
FIG. 6 is an exploded perspective view illustrating another example of a cooling component of an optical module.
FIG. 7A is a cross-sectional view taken along line VIIa-VIIa in FIG. 6.
FIG. 7B is a cross-sectional view taken along line VIIb-VIIb in FIG. 6.
FIG. 7C is a side view of the cooling component in FIG. 6.
FIG. 8A is a cross-sectional view illustrating yet another example of a cooling component.
FIG. 8B is a cross-sectional view illustrating the cooling component in FIG. 8A in a different state from in FIG. 8A.

### DESCRIPTION OF EMBODIMENTS

Hereafter, embodiments of the present disclosure are described while referring to the drawings. The drawings used in the following description are schematic drawings. The dimensional ratios and so on in the drawings do not necessarily match the actual dimensional ratios and so on. In addition, illustration of some details may be omitted and some shapes may be illustrated in an exaggerated manner. A Cartesian coordinate system xyz is added to the drawings for convenience. The relationship between the Cartesian coordinate system xyz and the vertical direction, etc., may be any relationship.

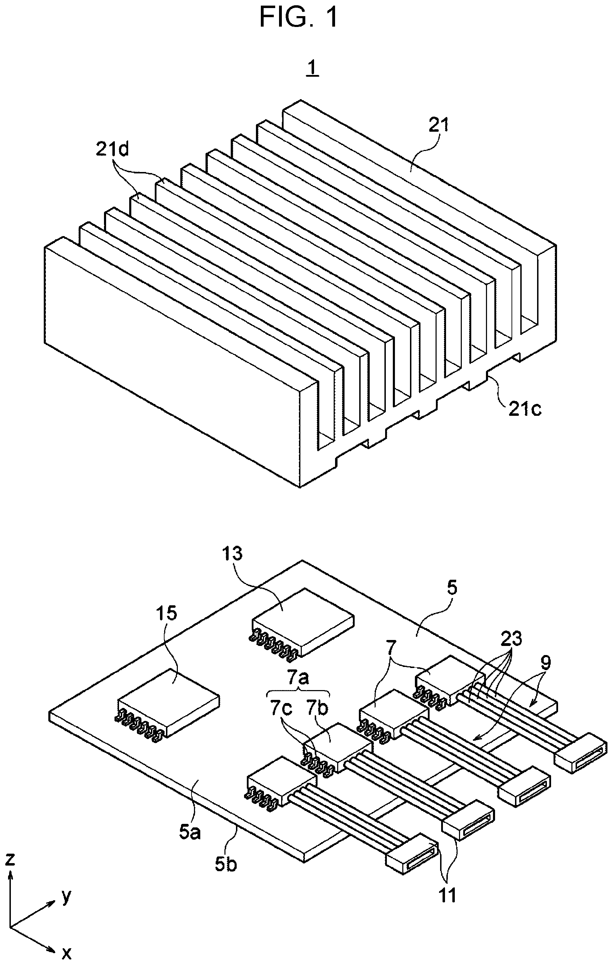

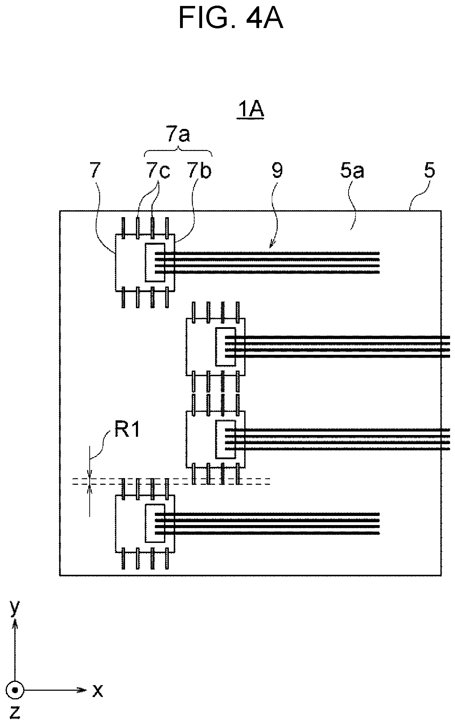

Hereafter, one embodiment (FIGs. 1 to 3) will be described first, and then various other examples (FIGs. 4A to 8B) will be described. In the description of the other examples, basically only the differences from the previously described modes (embodiment etc.) will be described. Matters not specifically mentioned may be assumed to be the same as or analogous to the previously described modes. In addition, the description of one mode may be applied to other modes so long as there are no contradictions and so on.

### (Schematic Configuration of Optical Module)

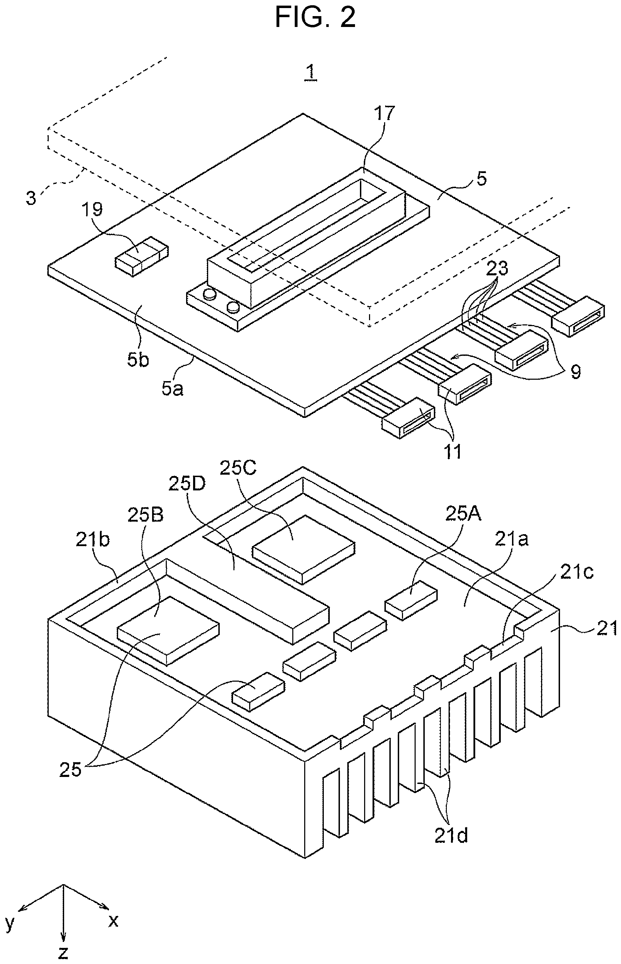

FIG. 1 is an exploded perspective view of an optical module 1 of an embodiment of the present disclosure viewed from the +z side. FIG. 2 is an exploded perspective view of the optical module 1 viewed from the -z side.

The optical module 1 performs at least one of conversion from optical signals to electrical signals or conversion from electrical signals to optical signals. The optical module 1 is configured to allow input and/or output of multi-channel optical signals.

The optical module 1 is electrically connected to, for example, an external electronic device (e.g., a motherboard 3 represented by dotted lines in FIG. 2). In addition, the optical module 1 is optically connected to an optical element external to the optical module 1 (e.g., an optical waveguide, which is not illustrated). The optical module 1 contributes to transmission of signals between the motherboard 3 and a mating device (or a mating device including an optical waveguide, same applies hereafter), which is not illustrated, connected to an end of an optical waveguide. From another perspective, the optical module 1 contributes to transmission of information between the motherboard 3 and the mating device.

Note that optical waveguides include sheet-like or plate-like structures as well as optical fibers. The optical module 1 may be optically connected to an external light emitting element or light receiving element without an external optical waveguide interposed therebetween. However, the description of this embodiment may be given under the assumption that the optical module 1 is connected to an external optical waveguide. The optically connected mating device may be, for example, another electronic device that performs optical communication with the electronic device including the motherboard 3 or may be a device inside the electronic device including the motherboard 3.

The division of roles between the motherboard 3 and the optical module 1 may be set as appropriate. For example, the optical module 1 only contributes to the transmission of information without substantially modifying the information contained in the input and/or output optical signals. Furthermore, the optical module 1 does not modulate and/or demodulate signals, change the frequencies of the signals, filter the signals, or perform AD conversion of the signals, and only performs photoelectric conversion and amplification of the signals. However, at least some of the processes mentioned above that are not performed by the optical module 1 may be performed by the optical module 1. The optical signals and/or electrical signals input to and/or output from the optical module 1 may be, for example, binary digital signals or signals in other formats.

In order to realize the above operations, the optical module 1 includes the following components, for example.
·A module substrate 5
·Multiple (four in the illustrated example) optical ICs 7 that are mounted on the module substrate 5 and perform photoelectric conversion
·Multiple fiber bundles 9 (same number as the optical ICs 7) extending from the multiple optical ICs 7
·Multiple optical connectors 11 (same number as the fiber bundles 9) located on the opposite side of the multiple fiber bundles 9 from the multiple optical ICs 7
·At least one (one in the illustrated example) control IC 13 that is mounted on the module substrate 5 and controls the multiple optical ICs 7
·At least one (one in the illustrated example) power supply IC 15 that is mounted on the module substrate 5 and supplies power to the multiple optical ICs 7
·An electrical connector 17 mounted on the module substrate 5 and electrically connected to an electronic device external to the optical module 1 (in this case, the motherboard 3)
·A passive component 19 mounted on the module substrate 5
·A cooling component 21 (heat sink in the illustrated example) that contributes to cooling of the multiple optical ICs 7

Each fiber bundle 9 includes multiple (four in the illustrated example) optical fibers 23 extending in parallel with each other. In other words, each optical IC 7 allows input and/or output of multi-channel optical signals. The optical module 1 allows input and/or output of optical signals using a number of channels that is the sum of the numbers of channels of the multiple optical ICs 7.

The multiple optical ICs 7 as well as the control IC 13, the power supply IC 15, and the electrical connector 17 are mounted on the module substrate 5. In this way, the optical module 1 is configured. Therefore, the optical module 1 is small in size compared to a configuration in which the optical ICs 7 are attached to a circuit board using connectors, for example. The optical module 1 does not need to include the passive component 19 or the cooling component 21.

In the present disclosure, when ICs (7, 13, 15, etc.) are said to be mounted on the module substrate 5, the ICs are bonded to the module substrate 5 using a conductive bonding material (not illustrated) such as solder (including lead-free solder). Therefore, for example, a mode in which the ICs are disposed on the module substrate 5 so as to be removable by using connectors is not included in the meaning of "mounted" used here.

In present disclosure, when ICs are said to be mounted on the module substrate, the number of ICs may be counted based on units that are directly mounted to the module substrate 5. For example, all of the multiple optical ICs 7 are not to be conceptualized as a single IC. Conversely, even if one optical IC 7 contains multiple IC chips, that one optical IC 7 is not to be regarded as multiple ICs.

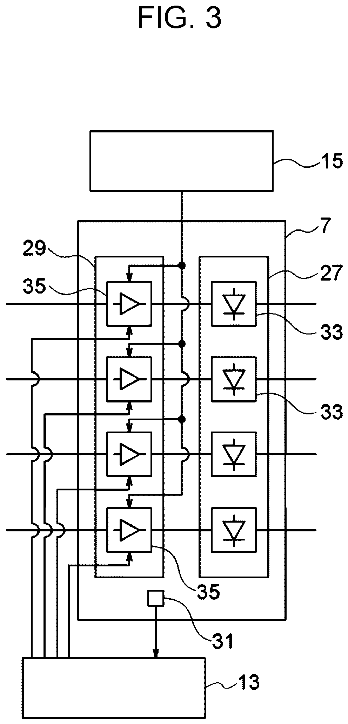

Hereafter, referring to FIGs. 1 and 2, the configurations of the components of the optical module 1 will be described roughly in the order listed above. After that, while referring to FIG. 3, an example of the processing performed by the optical ICs 7 and the control IC 13 will be described.

### (Module Substrate)

The module substrate 5 is, for example, a flat board-shaped member. The front surface and back surface of this flat board are a first mounting surface 5a and a second mounting surface 5b, respectively, on which electronic components (such as the optical ICs 7) are mounted. The module substrate 5 is composed of, for example, a rigid printed wiring board. The basic configuration (excluding specific configurations according to the arrangement of the optical ICs 7 and so on) of the rigid printed wiring board may be any of various configurations, for example, may be a known configuration.

For example, the printed wiring board may be a double-sided board or a multilayer board on which electronic components (such as the optical ICs 7 in this case) can be mounted on the front and back surfaces. A double-sided board includes a board-shaped insulator and conductor layers (not illustrated) stacked on both surfaces of the insulator. A multilayer board includes a board-shaped insulator and three or more conductor layers (not illustrated) located on both surfaces of the insulator and inside the insulator. The conductor layers may be connected to each other, for example, by solid or hollow via conductors (not illustrated) that penetrate partway through or through the entire thickness of the insulator. The conductor layers on the front and back surfaces of the insulator may be partially covered by an insulating film (solder resist). Unlike in the illustrated example, the printed wiring board may be a single-sided board having a conductor layer formed on only one surface of the board-shaped insulator.

For example, in the printed wiring board, the material of the insulator and the material of the conductor may be appropriate materials. For example, the insulator may be composed of an organic material or an inorganic material or a combination of organic and inorganic materials. More specifically, the insulator may be a material consisting of, for example, a base material such as glass cloth impregnated with a resin, or may be a ceramic. The conductor may be a metal such as copper. The conductor layer may, for example, be composed almost entirely of the same material, or may be composed of two or more layers stacked on top of one another, some or all of which are composed of different materials. Via conductors may, for example, be composed entirely of the same material, or may be composed of different materials on the inner side and the outer side thereof.

The conductors (conductor layers and via conductors), which are not illustrated, of the module substrate 5 may include parts having appropriate roles. For example, the conductors may include lands on which various electronic components (7, 13, 15, 17, and 19) are mounted and wiring lines that connect the lands to each other. The lands may be pads for surface mounting or may be for through-hole mounting. In addition to the above, the conductors may also include portions constituting electronic elements. An electronic element is, for example, a passive element such as a resistor, an inductor, or a capacitor.

The planar shape and various dimensions of the module substrate 5 may be set as appropriate in accordance with the number and size of the electronic components (such as the optical ICs 7) to be mounted on the module substrate 5. In the illustrated example, the planar shape of the module substrate 5 is a rectangle having four sides parallel to the x direction or the y direction. As an example of the dimensions in a relatively small optical module 1, the length of each side of the module substrate 5 in plan view is greater than or equal to 30 mm and less than or equal to 50 mm. If the module substrate 5 does not have a rectangular shape, each side of the smallest rectangle encompassing the module substrate 5 may satisfy the above range of dimensions.

### (Optical ICs 7)

The multiple optical ICs 7 have identical configurations, for example. Unlike in the illustrated example, the configuration of at least some of the optical ICs 7 may be different from the configuration of the other optical ICs 7 in terms of their internal configuration and/or their externally visible configuration. For example, some of the optical ICs 7 may be for transmitting optical signals and the remaining optical ICs 7 may be for receiving optical signals. The number of channels of some of the optical ICs 7 may be different from the number of channels of the other optical ICs 7. For convenience, this embodiment may be described under the assumption that the multiple optical ICs 7 have identical configurations.

Each optical IC 7 is, basically, a thin (the length in the z direction is shorter than the lengths in the x direction and y direction) rectangular-parallelepiped-shaped component. A fiber bundle 9 (multiple optical fibers 23) extends out from one surface (+x side) of the rectangular parallelepiped. The optical IC 7 performs photoelectric conversion for multiple optical signals carried by the multiple optical fibers 23. The optical IC 7 may include, for example, an electronic element such as a photoelectric conversion element (described later) and a package 7a that houses the electronic element. The size of the optical IC 7 (package 7a) may be set as appropriate in accordance with the number and diameter of the optical fibers 23 and the number and size of the electronic elements thereinside.

Except for the point that the optical fibers 23 extend out of the package 7a of the optical IC 7, the configuration of the package 7a of the optical ICs 7 may be any one of various configurations, for example, may be the same as or similar to a known configuration. For example, the material of a sealing portion 7b of the package 7a may be ceramic or resin. The package 7a may be a package to be surface mounted (illustrated example) or a package to be through-hole mounted. In the case of surface mounting, terminals 7c may be pins (illustrated example) or may be pads (or bumps bonded to pads). The shape and number of pins may be any shape and number. In the illustrated example, a mode is illustrated in which pins, serving as terminals, extend out from two side surfaces along the xz plane. In the description of the embodiment, this mode may be assumed for convenience.

The multiple optical ICs 7 are mounted together on the first mounting surface 5a of the module substrate 5. The multiple optical ICs 7 are mounted so that, for example, the directions in which the fiber bundles 9 extend out are the same as each other. The multiple optical ICs 7 are mounted at different positions from each other in a direction (y direction) perpendicular to the direction in which the fiber bundles 9 extend, for example, so that the multiple fiber bundles 9 do not overlap each other. In the illustrated example, the multiple optical ICs 7 are arranged in a single row in the y direction. In other words, the positions of the multiple optical ICs 7 in the x direction are identical to each other. The pitch of the arrangement is, for example, constant.

When the positions of the electronic components in plan view are said to be the same as or different from each other, for example, this may refer to the positions of the geometric centers of the electronic components in plan view.

The number of optical ICs 7 may be any number greater than or equal to two. In the illustrated example, four optical ICs 7 are illustrated. This is merely one example, and for example, the number of optical ICs 7 may be two or may be ten or more. The number may be odd or even.

The positions and arrangement range and so on of the multiple optical ICs 7 in the x direction and the y direction may be freely chosen. For example, when the module substrate 5 is divided into three equal parts in the x direction, each optical IC 7 may fit into one of the areas or may straddle two or more areas. The center of each optical IC 7 may coincide with the center of the module substrate 5 in the x direction, or may be located on the +x side or the -x side. The center of the arrangement range of all the multiple optical ICs 7 in the y direction may coincide with the center of the module substrate in the y direction (illustrated example) or may be located on the +y side or the -y side.

However, from the viewpoint of size reduction, the pitch of the multiple optical ICs 7 may be relatively small, and the length of the module substrate 5 in the y direction may be set so that the difference between the length of the module substrate 5 and the length of the arrangement range of all the multiple optical ICs 7 in the y direction is small. For example, the pitch of the multiple optical ICs 7 may be a minimum size at which short circuits do not occur between adjacent optical ICs 7. The arrangement range in the y direction of all the multiple optical ICs 7 (e.g., the smallest rectangular range encompassing all the optical ICs 7) may be greater than or equal to 2/3, 3/4, or 4/5 of the length of the module substrate 5 in the y direction.

Unlike in the illustrated example, there may be an optical IC 7 that is mounted on the second mounting surface 5b. There may also be an optical IC 7 from which the fiber bundle 9 extend out in a direction other than toward the +x side.

### (Fiber Bundles)

The configurations of the multiple fiber bundles 9 are, for example, identical to each other. Unlike in the illustrated example, the configuration of at least some of the fiber bundles 9 may be different from the configuration of the other fiber bundles 9. For example, the number of optical fibers 23 included in some of the fiber bundles 9 may be different from the number of optical fibers 23 included in the other fiber bundles 9. For example, the length of some of the fiber bundles 9 may be different from the length of the other fiber bundles 9.

In each fiber bundle 9, the multiple optical fibers 23 may be bundled together and covered by a sheath, but do not need to be bundled together. In the drawings of the present disclosure, a mode is illustrated in which a sheath is not provided so the fact that the fiber bundle 9 includes the optical fibers 23 is easily seen. As is clear from the fact that the multiple optical fibers 23 do not need to be bundled together, the multiple optical fibers 23 do not need to extend parallel to each other when the multiple optical fibers 23 are said to extend in parallel with each other.

The number of optical fibers 23 that each fiber bundle 9 contains may be any number of two or more. In the illustrated example, four optical fibers 23 are illustrated. This is merely one example, and for example, the number of optical fibers 23 contained in each fiber bundle 9 may be two or may be ten or more. The number may be odd or even.

The arrangement of the optical fibers 23 in the cross-section of each fiber bundle 9 may be freely chosen. In the illustrated example, all the optical fibers 23 are arranged in one row in one radial direction (y direction) of the optical fibers 23, at least inside the optical IC 7 and inside the optical connector 11. Within the optical IC 7, the arrangement direction of the optical fibers 23 is, for example, the longitudinal direction of a side surface (surface on +x side) of the optical IC 7, or, from another perspective, a direction along the first mounting surface 5a of the module substrate 5. Unlike in the illustrated example, the optical fibers 23 may be arranged in two or more rows or in a manner that does not conform to the concept of an array.

The configuration of each optical fiber 23 may be any one of various configurations, for example, may be a known configuration. For example, although not specifically illustrated, the optical fiber 23 includes a core and a cladding that covers the core and has a higher refractive index than the core. The core and cladding are composed of a translucent material (e.g., quartz glass or plastic). The optical fiber 23 may further include a coating composed of a suitable material (e.g., resin or fiber) covering the cladding. For example, the optical fiber 23 may be a single-mode fiber or a multimode fiber. The diameter of the optical fiber 23 may be any diameter.

The optical fiber 23 has, for example, a certain degree of flexibility. Consequently, the fiber bundle 9 is flexible. Therefore, the optical connector 11 can be oriented in various directions other than the direction illustrated in the drawings. In the illustrated example, the multiple optical fibers 23 are arrayed in the y direction and so can be relatively easily deformed so as to bend in the z direction.

The fiber bundle 9 is fixed to the optical IC 7 in a non-removable manner. In other words, the fiber bundle 9 cannot be separated from the optical IC 7 without damaging the optical IC 7. For example, the fiber bundle 9 and the sealing portion 7b are fixed to each other using an adhesive or by being directly adhered to each other and/or by the sealing portion 7b clamping the fiber bundle 9. The fiber bundle 9 and the optical connector 11 may be fixed to each other in the same or a similar manner. However, the optical connector 11 may be composed of two or more members fixed to each other by screws or the like, and part or all of the members may be separable from the fiber bundle 9.

### (Optical Connector)

The optical connector 11 is configured to be removably connected to a mating connector (not illustrated) of an optical waveguide (not illustrated) external to the optical module 1, and is configured to optically connect the optical IC 7 to the external optical waveguide. The configurations of the multiple optical connectors 11 are, for example, identical to each other. Unlike in the illustrated example, the configuration of at least some of the optical connectors 11 may be different from the configuration of the other optical connectors 11.

The configuration of each optical connector 11 (and mating connector) may be any one of various configurations, and for example, may be a known configuration. For example, the optical connector 11 and the mating connector may be positioned in the radial direction of the optical fibers 23 by inserting (fitting) one housing into the other housing, and/or may be positioned in the radial direction of the optical fibers 23 by inserting (fitting) guide pins provided in one connector into guide holes provided in the other connector. The end surfaces of the optical fibers 23 and the end surfaces of the external optical waveguides may face each other directly or may be optically connected to each other via optical components (e.g., lenses) provided in at least one connector.

### (Control IC)

The control IC 13 is mounted on the module substrate 5 and is electrically connected to at least one optical IC 7 via conductors (wiring lines) of the module substrate 5. The control IC 13 inputs control signals to the at least one optical IC 7. The specific operations of the optical ICs 7 controlled by the control IC 13 may be any of various operations, and an example is described later with reference to FIG. 3.

The number of control ICs 13 may be any number. In the illustrated example, only one control IC 13 is provided, and the one control IC 13 controls all the optical ICs 7. Unlike in the illustrated example, for example, the same number of control ICs 13 as the number of multiple optical ICs 7 may be provided, and one control IC 13 may control only one optical IC 7. In addition, for example, the control ICs 13 may be provided in a number greater than or equal to two but less than the number of optical ICs 7, or the control ICs 13 may be provided in a number greater than the number of optical ICs 7. From another perspective, the number of optical ICs 7 controlled by each control IC 13 may differ from one control IC 13 to another control IC 13, or two or more control ICs 13 may control one optical IC 7 in different ways from each other. As described above, the optical module 1 may include at least one control IC 13 that controls at least one optical IC 7.

As is clear from the above description, in a mode in which multiple control ICs 13 are provided, the configurations of the multiple control ICs 13 may be identical to each other or different from each other in terms of the internal configuration and/or the externally visible configuration. The configuration of the control ICs 13 may be any of various configurations, and, for example, may be known configurations, except for specific configurations related to processing contents and so on. The description of the package 7a of the optical IC 7 described above may be applied to the package of the control IC 13 (reference symbol omitted) so long as no contradictions arise. Unlike in the case of the optical IC 7, the fiber bundles 9 do not extend out from the control IC 13, and therefore, unlike in the illustrated example, the control IC 13 may be provided with pin-shaped terminals (reference symbol omitted) on four side surfaces thereof.

The position at which control IC 13 is mounted may be any position. In the illustrated example, the control IC 13 is mounted on the first mounting surface 5a. In other words, the control IC 13 is mounted on the same mounting surface as the mounting surface on which the multiple optical ICs 7 are mounted. Unlike in the illustrated example, one or more control ICs 13 may be mounted on the second mounting surface 5b. The multiple control ICs 13 may be mounted in a dispersed manner on the first mounting surface 5a and the second mounting surface 5b.

### (Power Supply IC)

The power supply IC 15 is mounted on the module substrate 5 and electrically connected to at least one optical IC 7 via conductors (wiring lines) of the module substrate 5. The power supply IC 15 supplies power to the at least one optical IC 7.

The number of power supply ICs 15 may be any number. In the illustrated example, only one power supply IC 15 is provided, and the one power supply IC 15 supplies power to all the optical ICs 7. Unlike in the illustrated example, for example, the same number of power supply ICs 15 as the number of multiple optical ICs 7 may be provided, and one power supply IC 15 may supply power to only one optical IC 7. In addition, for example, the power supply ICs 15 may be provided in a number greater than or equal to two but less than the number of optical ICs 7, or the power supply ICs 15 may be provided in a number greater than the number of optical ICs 7. From another perspective, the number of optical ICs 7 supplied with power by each power supply IC 15 may differ from one power supply IC 15 to another power supply IC 15, or two or more power supply ICs 15 may supply different powers to one optical IC 7. As described above, the optical module 1 may include at least one power supply IC 15 that supplies power to at least one optical IC 7.

As is clear from the above description, in a mode in which multiple power supply ICs 15 are provided, the configurations of the multiple power supply ICs 15 may be identical to each other or different from each other in terms of the internal configuration and/or the externally visible configuration. The configuration of the power supply ICs 15 may be any of various configurations, and, for example, may be of any known configuration, except for specific configurations related to role contents and so on. The description of the package 7a of the optical IC 7 described above may be applied to the package of the power supply IC 15 (reference symbol omitted) so long as no contradictions arise. Unlike the optical ICs 7, the fiber bundles 9 do not extend out from the power supply IC 15, and therefore, unlike in the illustrated example, the power supply IC 15 may be provided with pin-shaped terminals (reference symbol omitted) on four side surfaces thereof.

The power supply IC 15 may be configured, for example, as a DC (Direct Current)/DC converter. For example, the power supply IC 15 converts DC power supplied from the outside (motherboard 3) via the electrical connector 17 into DC power of an appropriate voltage or an appropriate current and supplies the DC power to the optical ICs 7. The power supply IC 15 may be a constant voltage power supply or a constant current power supply. The power supply IC 15 may be capable of supplying multiple types of power with different voltages or currents from each other, or may be capable of supplying one type of power. Unlike in the above description, the power supply IC 15 may be a converter other than a DC/DC converter. The power supply IC 15 may contribute or not contribute to supplying power to the control IC 13. Unlike in the illustrated example, other power supply ICs may be interposed between the electrical connector 17 and the power supply IC 15.

The position where the power supply IC 15 is mounted may be any position. In the illustrated example, the power supply IC 15 is mounted on the first mounting surface 5a. In other words, the power supply IC 15 is mounted on the same mounting surface as the mounting surface on which the multiple optical ICs 7 are mounted. Unlike in the illustrated example, one or more power supply ICs 15 may be mounted on the second mounting surface 5b (surface on which the optical ICs 7 are not mounted). The multiple power supply ICs 15 may be mounted in a dispersed manner on the first mounting surface 5a and the second mounting surface 5b.

### (Electrical Connector)

The electrical connector 17 is configured to be removably connected to a mating connector (not illustrated) of the motherboard 3 (or of a cable interposed between the motherboard 3 and the optical module 1), and to electrically connect the module substrate 5 to the motherboard 3. The electrical connector 17 (or, from another perspective, the motherboard 3 connected to the electrical connector 17) is electrically connected to the electronic components mounted on the module substrate 5 by conductors (wiring lines) of the module substrate 5. For example, the electrical connector 17 is connected to the optical ICs 7, the control IC 13, and the power supply IC 15 directly or indirectly via other electronic elements. The other electronic elements are, for example, active elements or passive elements mounted on the module substrate 5 or passive elements composed of conductors of the module substrate 5.

The number of electrical connectors 17 may be any number. In the illustrated example, only one electrical connector 17 is provided. Unlike in the illustrated example, in a mode in which two or more electrical connectors 17 are provided, the two or more electrical connectors 17 may be connected to the same device (here, motherboard 3) or may be connected to different devices from each other.

The position at which the electrical connector 17 is mounted may be any position. In the illustrated example, the electrical connector 17 is mounted on the second mounting surface 5b (the surface on which the optical ICs 7 are not mounted) and fits together with a connector of the mating device in the z direction. Unlike in the illustrated example, one or more electrical connectors 17 may be mounted on the first mounting surface 5a (the surface on which the optical ICs 7 are mounted), or may be disposed on an edge portion of the module substrate 5 and fit together with electrical connectors of the mating device in a direction along the module substrate 5. The multiple electrical connectors 17 may be mounted in a dispersed manner on the first mounting surface 5a and the second mounting surface 5b.

The configuration of each of the electrical connectors 17 (and mating connectors) may be any of various configurations, and for example, may be known configurations. For example, the electrical connector 17 and the mating connector may be positioned with respect to each other by inserting (fitting) one housing into the other housing and/or by contact between terminals. For example, the electrical connector 17 and the mating connector may be electrically connected to each other by inserting multiple pin-shaped terminals of one connector into multiple tubular terminals of the other connector, or may be electrically connected to each other by multiple layer-like terminals formed on a surface of a substrate of one connector contacting plate spring terminals provided in recesses of the other connector.

### (Passive Component)

The passive component 19 is, for example, a resistor, a capacitive element, or an inductor. One passive component 19 may be, for example, interposed between any two from among the electrical connector 17, the optical ICs 7, the control IC 13, and the power supply IC 15 and may contribute to impedance matching. The number, function (resistor, capacitive element, or inductor, etc.), shape (chip type, etc.), size, mounting method (surface mounting or through-hole mounting, etc.) and mounting position of the passive component 19 may be freely chosen.

### (Cooling Component)

The cooling component 21 (heat sink) is composed of a material having high heat transfer characteristics. The cooling component 21 is thermally connected to at least one of the module substrate 5 or the electronic components mounted on the module substrate 5 directly or via another material (e.g., grease). In this way, the cooling component 21 contributes to improving the heat dissipation of the optical module 1. A material having high heat transfer properties is, for example, a metal (e.g., aluminum). The entirety of the cooling component 21 may be, for example, formed of the same material in one piece. The cooling component 21 is disposed, for example, on the first mounting surface 5a side with respect to the module substrate 5. Although not specifically illustrated, instead of or in addition to the cooling component 21, a cooling component may be provided that is disposed on the second mounting surface 5b side with respect to the module substrate 5.

The cooling component 21 may include multiple fins 21d. The multiple fins 21d increase the surface area of the cooling component 21 and improve heat dissipation. In the illustrated example, the multiple fins 21d protrude toward the +z side (opposite side of the cooling component 21 from the first mounting surface 5a) and extend along the first mounting surface 5a. The thickness (length in the y direction in the illustrated example), height (length in the z direction), extension length (length in the x direction in the illustrated example), direction of extension (x direction or y direction, etc.), pitch, and number of fins 21d may be freely chosen. Instead of the multiple fins 21d, multiple pins may be provided that protrude toward the +z side and are disposed two-dimensionally along the xy-plane.

In the illustrated example, the cooling component 21 is configured to also function as a housing that protects the electronic components (7, 13, and 15, etc.) mounted on the first mounting surface 5a. Specifically, a recess 21a is formed in a surface of the cooling component 21 facing the first mounting surface 5a. From another perspective, the cooling component 21 includes an annular wall portion (from another perspective, four wall portions 21b extending along four sides) extending along the edge of the surface facing the first mounting surface 5a. The cooling component 21 is disposed on the first mounting surface 5a so that the top surfaces (-z-side surfaces) of the four wall portions 21b contact the first mounting surface 5a. The electronic components mounted on the first mounting surface 5a are accommodated in the recess 21a.

Cut outs 21c are formed in the wall portion 21b on the +x side so as to reduce the height of the wall portion 21b. This allows the fiber bundles 9 to extend out into the space outside the cooling component 21. In the illustrated example, multiple cut outs 21c are formed, with one cut out 21c allowing one fiber bundle 9 to extend out. Unlike in the illustrated example, the number of cut outs 21c may be one or may be a plural number that is less than the number of fiber bundles 9, and one cut out 21c may allow two or more fiber bundles 9 to extend out. The shape and dimensions of the cut outs 21c may be freely chosen. For example, the depth (length in the z direction) of the cut outs 21c may be smaller than (illustrated example) or equal to the height (length in the z direction) of the wall portion 21b.

The cooling component 21 may include convex portions 25 (25A to 25D) on the surface facing the first mounting surface 5a, the convex portions 25 contributing to contact with the first mounting surface 5a and/or the electronic components mounted on the first mounting surface 5a (e.g., the surface on the +z side). In the illustrated example, the multiple convex portions 25A that individually contact the multiple optical ICs 7, the convex portion 25B that contacts the control IC 13, the convex portion 25C that contacts the power supply IC 15, and the convex portion 25D that contacts the first mounting surface 5a are illustrated. The wall portions 21b may be taken as examples of the convex portions 25. The convex portions 25 may also be provided in a mode in which the cooling component 21 does not function as a housing.

The shape and size of the convex portions 25 may be freely chosen. For example, in the illustrated example, one convex portion 25 is provided for each IC, but one convex portion 25 may contact two or more ICs (of the same type or different types). The area of contact between one convex portion 25 and one IC may occupy or not occupy a major portion (e.g., 80% or more) of the area of the top surface (surface on +z side) of the IC. In the illustrated example, the convex portions 25B and 25C are in contact with the majority of the top surfaces of the control IC 13 and the power supply IC 15. On the other hand, each convex portion 25A is in contact with the top surface of the corresponding optical IC 7 in planar perspective view so as to overlap a processing section 29 (FIG. 3 described later) but not overlap a conversion section 27 (FIG. 3 below), and the contact area is at least 30% but less than 80% of the area of the top surface of the optical IC 7. The convex portion 25D does not need to be provided, or conversely, may be provided over a wider area than in the illustrated example.

The cooling component 21 (or convex portions 25 from another perspective) may be in direct contact with the cooling targets (first mounting surface 5a or electronic components) or may be in indirect contact with the cooling targets via another material. The other material may be grease, for example. The other material may be a sheet having high heat transfer properties and elasticity that is affixed to the convex portions 25 and/or the cooling targets. The sheet that is affixed to the convex portions 25 may be considered to be part of the convex portions 25. Unlike in the illustrated example, the grease and/or sheet may be disposed in order to achieve a thermal connection between the cooling component 21 and the cooling targets without providing the convex portions 25. In this case, the above description of the contact target and contact area, etc. of the convex portions 25 may be used for the contact target and contact area, etc. of the grease and/or sheet.

The cooling component 21 may be fixed to the module substrate 5 using a suitable method. For example, the cooling component 21 may be fixed using screws (or nuts, if necessary), which are not illustrated, or by an engaging claw.

### (Example of Processing of Optical IC and Control IC)

FIG. 3 is a block diagram illustrating an example configuration of a signal processing system of the optical module 1. Here, one optical IC 7, one control IC 13, and one power supply IC 15 are illustrated.

The optical IC 7 includes, for example, the conversion section 27, which is directly responsible for photoelectric conversion, the processing section 29, which processes electrical signals relating to the conversion section 27, and a sensor 31 that detects temperature.

The conversion section 27 includes, for example, the same number of photoelectric conversion elements 33 as the number of channels (the number of optical fibers 23 connected to one optical IC 7). The photoelectric conversion elements 33 are, for example, laser diodes for transmitting optical signals or photodiodes for receiving optical signals. The laser diodes generate an optical signal in response to an electrical signal input from the processing section 29 and output the optical signal to the optical fibers 23. The photodiodes generate an electrical signal in response to an optical signal input from the optical fibers 23 and output the electrical signal to the processing section 29.

The processing section 29 includes, for example, the same number of individual circuits 35 as the number of channels. The multiple individual circuits 35 are individually (in a one-to-one manner) connected to the multiple photoelectric conversion elements 33. The individual circuits 35 are drive circuits for transmitting optical signals or amplification circuits for receiving optical signals. The drive circuits each output an electrical signal to the corresponding photoelectric conversion element 33 in response to an electrical signal input from outside the optical module 1 via the electrical connector 17. The amplification circuits each amplify an electrical signal input from the corresponding photoelectric conversion element 33 and output the electrical signal to outside the optical module 1 via the electrical connector 17.

The relationship between the above configuration in terms of signal processing and the configuration in terms of the hardware of the optical ICs 7 may be freely chosen. For example, the multiple photoelectric conversion elements 33 may be fabricated as separate elements and mounted on the same substrate, or may be fabricated on the same substrate. The multiple individual circuits 35 may be fabricated as separate IC chips and mounted on the same substrate, or may be fabricated within a single IC chip. The conversion section 27 and the processing section 29 may be fabricated as separate chips and mounted on the same substrate, or may be fabricated in the same chip as each other. This also applies to the sensor 31.

The positional relationship between the conversion section 27 and the processing section 29 in planar perspective view may also be freely chosen. For example, the conversion section 27 may be positioned on the side where the fiber bundle 9 extends out from the optical IC 7 (+x side in FIG. 1) with respect to the processing section 29. As previously described, the cooling component 21 may directly or indirectly contact the top surface of the optical IC 7 so as to overlap the processing section 29 but not overlap the conversion section 27 in planar perspective view. Of course, unlike in the description above, the cooling component 21 may contact the top surface of the optical IC 7 so as to overlap the conversion section 27.

The sensor 31 outputs an electrical signal corresponding to the temperature to the control IC 13. The control IC 13, for example, controls the individual circuits 35 based on the temperature detected by the sensor 31 in order to compensate for changes in the characteristics of the photoelectric conversion elements 33 caused by temperature changes. Specifically, for example, each individual circuit 35 applies a bias to the anode or cathode of the corresponding photoelectric conversion element 33 with a voltage or current according to a value stored in a register thereof. The control IC 13 overwrites the value stored in the register in accordance with the value detected by the sensor 31. As a result, changes caused by temperature variations in the relative relationship between the strength of the optical signal and the strength of the electrical signal are reduced.

The configuration, number, and location of the sensor 31 may be freely chosen. For example, the sensor 31 consists of a thermistor or resistance thermometer, and the electrical resistance thereof changes in accordance with temperature. The sensor 31 may include only a transducer or may include a circuit that performs predetermined processing (e.g., amplification) in addition to the transducer. Only one sensor 31 may be provided for one optical IC 7 (illustrated example), or multiple sensors 31 may be provided for multiple photoelectric conversion elements 33 in an individual manner. Multiple sensors 31 may be provided in a number less than the number of photoelectric conversion elements 33, and the value detected by the nearest sensor 31 may be used for each photoelectric conversion element 33, or a representative value of the detected values may be used.

An example of the above processing may be modified as appropriate. For example, in the above description, the multiple individual circuits 35 individually apply biases to the multiple photoelectric conversion elements 33. However, a single circuit may be provided that applies a common bias to the multiple photoelectric conversion elements 33. For example, instead of the processing section 29 inside the optical IC 7 generating the bias, the control IC 13 may generate the bias.

As mentioned above, in the illustrated example, the control IC 13 is not interposed between the electrical connector 17 and the optical ICs 7. In other words, the control IC 13 does not have a function of transmitting electrical signals to be converted to optical signal and/or electrical signals converted from optical signals. However, the control IC 13 may have such a function. The control IC 13 may also have other functions such as a function of monitoring the current applied to the photoelectric conversion elements 33.

### (Summary of Embodiment)

As described above, the optical module 1 may include the module substrate 5, the multiple optical ICs 7, the multiple fiber bundles 9, the multiple optical connectors 11, the at least one control IC 13, and the at least one power supply IC 15. The module substrate 5 has a first surface (first mounting surface 5a) that extends in a first direction (y direction) and a second direction (x direction) perpendicular to the first direction. The multiple optical ICs 7 are mounted on the first mounting surface 5a at different positions from each other in the y direction and perform photoelectric conversion. The multiple fiber bundles 9 each include multiple optical fibers 23 extending in parallel with each other and extending out from the corresponding optical IC 7 toward the first side (+x side) in the second direction. The multiple optical connectors 11 are located at the opposite ends of the multiple fiber bundles 9 from the multiple optical ICs 7 and are connected to external optical elements (e.g., optical waveguides, which are not illustrated) and allow transmission of optical signals. The at least one control IC 13 is mounted on the module substrate 5 and controls at least one of the multiple optical ICs 7. The at least one power supply IC 15 is mounted on the module substrate 5 and supplies power to at least one of the multiple optical ICs 7.

Therefore, for example, the transmission bandwidth can be expanded by providing multiple optical ICs 7 that can each transmit multi-channel optical signals. On the other hand, size reduction is achieved due to the fact that the multiple optical ICs 7, the control IC 13, and the power supply IC 15 are all mounted on the module substrate 5 and modularized.

The at least one control IC 13 may include only one control IC 13. One control IC 13 may control multiple (all) the optical ICs 7.

In this case, the module substrate 5 can be reduced in size compared to, for example, a mode where the same number of control ICs 13 as the number of the multiple optical ICs 7 are provided (this mode is also included in the technology of the present disclosure). This is due to, for example, the fact that the volume occupied by the packages is reduced by forming a shared package and the gaps between the packages for avoiding short circuits between the packages are eliminated.

The at least one power supply IC 15 may include one power supply IC. One power supply IC 15 may supply power to multiple optical ICs 7.

In this case, for example, the module substrate 5 can be reduced in size similarly to the mode where only one control IC 13 is provided.

The optical module 1 may further include the cooling component 21 that is in direct or indirect contact with the multiple optical ICs 7 and the module substrate 5, and cools the multiple optical ICs 7 and the module substrate 5.

In this case, for example, the heat of the multiple optical ICs 7 can be dissipated by the cooling component 21 over a wide area that covers the module substrate 5 and optical communication can be stably performed. In addition, for example, as a result of being in contact with both the multiple optical ICs 7 and the module substrate 5, the temperature difference between the multiple optical ICs 7 and the module substrate 5 can be reduced and the temperature transient period can be reduced. As a result, for example, the probability of unstable optical communication occurring at the time of startup of equipment including the optical module 1 can be reduced.

### <Various Other Examples>

Various other examples of the optical module 1 are described below.

### (Other Examples of Arrangement of Optical ICs)

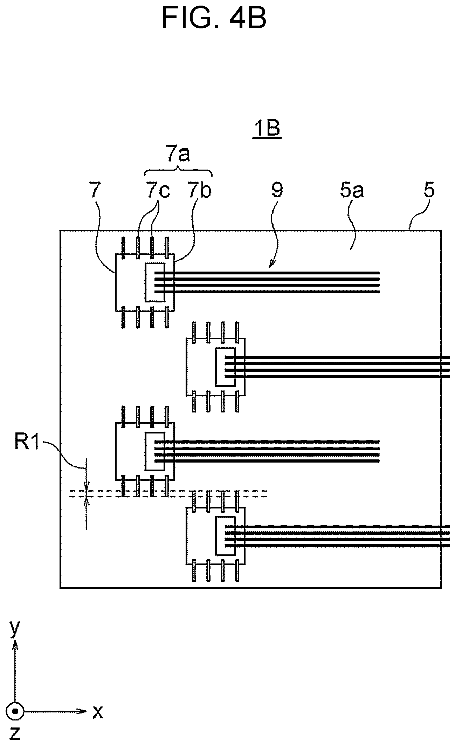

FIGs. 4A and 4B are schematic plan views illustrating another example and yet another example of the arrangement of the multiple optical ICs 7. That is, these drawings illustrate an optical module 1A of another example and an optical module 1B of yet another example.

In these examples, at least one optical IC 7 is displaced in the x direction with respect to one optical IC 7 (on one side) or two optical ICs 7 (on both sides) that are adjacent thereto in the order of arrangement in the y direction. This allows, for example, there to be a smaller spacing in the y direction between the optical ICs 7 that are adjacent to each other in the order of arrangement in the y direction. Furthermore, as indicated by an overlapping region R1, adjacent optical ICs 7 can be made to partially overlap each other in terms of the arrangement range in the y direction. Consequently, the arrangement range in the y direction of all the multiple optical ICs 7 can be reduced. From another perspective, in the example illustrated in FIG. 1, the spacing (in the y direction) between adjacent optical ICs 7 that is for reducing the probability of short circuits is dead space, and such spaces can be reduced. As a result, size reduction of the module substrate 5 is facilitated.

The specific mode to be adopted when shifting multiple optical ICs 7 in the x direction as described above may be chosen as appropriate. For example, all of the optical ICs 7 may be displaced with respect to the adjacent optical ICs 7 (FIG. 4B), or some of the optical ICs 7 may be displaced with respect to the adjacent optical ICs 7 (FIG. 4A).

More specifically, in the example in FIG. 4B, the multiple optical ICs 7 are displaced one by one toward opposite sides with respect to each other. As another mode in which all the optical ICs 7 are displaced with respect to adjacent optical ICs 7, for example, all the multiple optical ICs 7 are displaced one by one toward the same side. Another mode is where a group of two or more optical ICs 7 is displaced toward the same side, and then a group of two or more optical ICs 7 is displaced toward the opposite side from the same side (and then the above two types of displacement are repeated).

In the example in FIG. 4A, two or more optical ICs 7 in the center (two in the illustrated example) and two or more optical ICs 7 on both sides (two in the illustrated example) are displaced with respect to each other. As another mode in which some of the optical ICs 7 are displaced with respect to adjacent optical ICs 7, for example, two or more optical ICs 7 on one side in the y direction and at least one optical IC 7 on the other side in the y direction are displaced with respect to each other in the x direction.

Two optical ICs 7 that are adjacent to each other in the order of arrangement in the y direction and whose positions in the x direction are displaced with respect to each other may overlap each other in terms of the arrangement range in the y direction (an overlapping region R1 may be formed), or, unlike in the illustrated example, might not overlap each other in terms of the arrangement range in the y direction. Even in the latter case, reducing the arrangement range of all the multiple optical ICs 7 in the y direction is easier compared to the mode in FIG. 1.

In the mode in which the overlapping region R1 is formed, only the pin-shaped terminals 7c may overlap each other (illustrated example), or the sealing portions 7b may overlap each other. In the illustrated example, since the terminals 7c are pin-shaped for surface mounting, overlapping of the sealing portions 7b is based on the assumption that the pin-shaped terminals 7c overlap. However, as described previously, the terminals 7c may be, for example, pins for through-hole mounting or pads or bumps for surface mounting, and thus overlapping of the terminals 7c does not need to be based on the assumption that the sealing portions 7b overlap. The size of the overlapping region R1 in the y direction may be freely set.

The two optical ICs 7 that form the overlapping region R1 and are shifted with respect to each other in the x direction, for example, do not overlap each other in terms of the arrangement range in the x direction. The distance therebetween in the x direction (the size of the gap in the x direction) may be freely set. The two optical ICs 7 that form the overlapping region R1 can be made to overlap each other in terms of the arrangement range in the x direction. For example, as in the illustrated example, in a mode where the terminals 7c are pins for surface mounting, the terminal 7c furthest toward the +x side is separated from the +x side surface of the sealing portion 7b by a prescribed distance. This also applies to the -x side. Therefore, the x-direction arrangement ranges may overlap each other by a length shorter than the above distance.

In the two optical ICs 7 forming the overlapping region R1, the fiber bundle 9 extending out from the optical IC 7 located on the -x side may extend so as to not overlap the optical IC 7 located on the +x side (illustrated example), or may extend so as to partially overlap in the y direction. In the former case, the fiber bundle 9 may contact or not contact in the y direction the optical IC 7 on the +x side. In the mode in which part of the fiber bundle 9 extending from the optical IC 7 on the -x side overlaps the optical IC 7 on the +x side, the fiber bundle 9 extending from the optical IC 7 on the -x side and the fiber bundle 9 extending from the optical IC 7 on the +x side do not overlap each other, for example.

In the case where the external configurations of the optical ICs 7 adjacent to each other in the order of arrangement in the y direction are not identical to each other, whether or not the optical ICs 7 are displaced from each other in the x direction may be determined in a rational manner. For example, the geometric centers of the sealing portions 7b (or the smallest virtual rectangles surrounding the sealing portions 7b and the terminals 7c) may be compared to each other in order to determine whether the optical ICs 7 are displaced from each other.

As described above, at least one optical IC 7, among the multiple optical ICs 7, may be displaced in the second direction (x direction, the direction in which the fiber bundle 9 extends out from the optical IC 7) with respect to one or two optical ICs 7 that are adjacent thereto in the order of arrangement in the first direction (y direction).

In this case, for example, as already described above, size reduction of the module substrate 5 is facilitated. The optical IC 7 located on the +x side (side from which the fiber bundle 9 extends) relative to the optical IC 7 that is adjacent there to in the order or arrangement in the y direction can function as a member that restricts the movement in the y direction of the fiber bundle 9 extending from the adjacent optical IC 7. Therefore, not only is size reduction facilitated, but also the optical IC 7 can be used as a positioning member for the fiber bundle 9. From this perspective as well, size reduction of the module substrate 5 can achieved.

The at least one optical IC 7 may be disposed so as to not overlap the one or two adjacent optical ICs 7 in terms of the arrangement range in the second direction (x direction) and may be disposed so as to partially overlap the one or two adjacent optical ICs 7 in terms of the arrangement range in the first direction (y direction).

In this case, for example, the effect of reducing the arrangement range of all the multiple optical ICs 7 in the y direction is improved. Consequently, the effect of facilitating size reduction of the module substrate 5 is improved.

### (Another Example Relating to Power Supply IC)

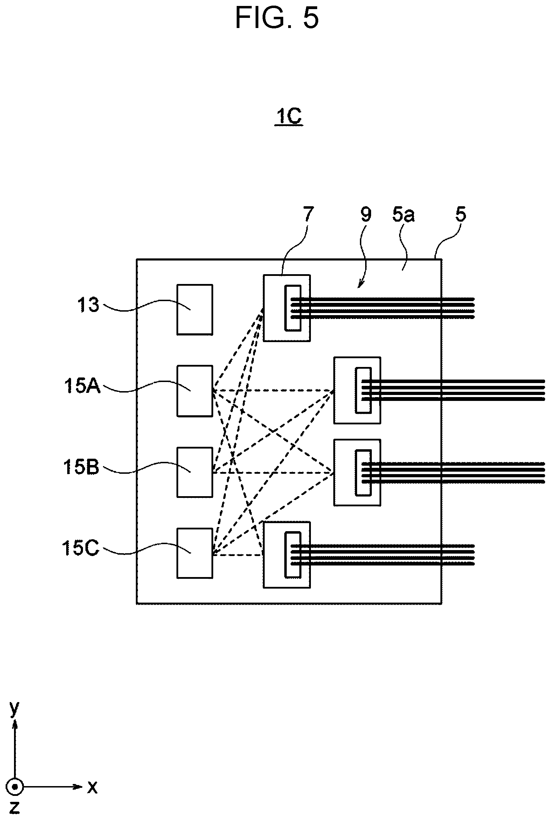

FIG. 5 is a schematic plan view of another example relating to the power supply IC 15. In other words, FIG. 5 illustrates an optical module 1C according to another example.

In the description of the embodiment, the fact that two or more power supply ICs 15 may be provided was mentioned. The optical module 1C is one example of such a mode. The multiple (three in the illustrated example) power supply ICs 15 (15A, 15B, and 15C) can, for example, supply powers of different voltages (or currents) from each other. Each power supply IC 15 also supplies power to multiple (e.g., all) optical ICs 7, as indicated by the dotted lines. Each optical IC 7, for example, uses the multiple types of power supplied by the multiple power supply ICs 15A to 15C for different purposes. For example, the optical ICs 7 may distribute multiple types of power to at least two or more from among internal core logic circuits, I/O (input/output) circuits, auxiliary logic circuits, circuits applying voltages to the photoelectric conversion elements 33, and memories.

The number of types of power (number of power supply ICs 15 in the illustrated example) may be any number. As mentioned in the description of the embodiment, the mounting positions of the multiple power supply ICs 15 may be any positions. In FIG. 5, although the arrangement of the optical ICs 7 in FIG. 4A is taken as an example arrangement, other arrangements are also clearly possible.

As described above, in the optical module 1C, the at least one power supply IC 15 may include two or more power supply ICs 15. The two or more power supply ICs 15 may supply power of different voltages from each other. Each power supply IC 15 may supply power to multiple optical ICs 7.

In this case, for example, focusing on one type of voltage (or current), each power supply IC 15 is shared by multiple optical ICs 7. Therefore, the optical module 1C can be reduced in size compared to a mode where a power supply IC 15 is provided for each optical IC 7 and each voltage (this mode is also included in the technology related to the present disclosure). In addition, compared to the optical module 1 (FIG. 1) that includes only one power supply IC 15, for example, the configuration of the power supply IC 15 can be simplified and the cost can be reduced.

### (Another Example Relating to Cooling Component)

As illustrated in FIGs. 4A and 4B, the optical ICs 7 may be located at different positions from each other in the x direction (the direction in which the fiber bundles 9 extend out). In this mode, when the lengths of the multiple fiber bundles 9 are identical to each other, the lengths by which the multiple fiber bundles 9 extend out from the edge of the module substrate 5 on the +x side are different from each other. Consequently, the multiple optical connectors 11 are located at different positions from each other. This difference may cause inconveniences depending on the configurations of the devices to which the multiple optical connectors 11 are connected. Therefore, in an example described below, a regulating member is provided that is for ensuring that the lengths by which the multiple fiber bundles 9 extend out from the edge of the module substrate 5 on the +x side are equal to each other. In the example described below, the cooling component also serves as the above-mentioned regulating member. This is described more specifically below.

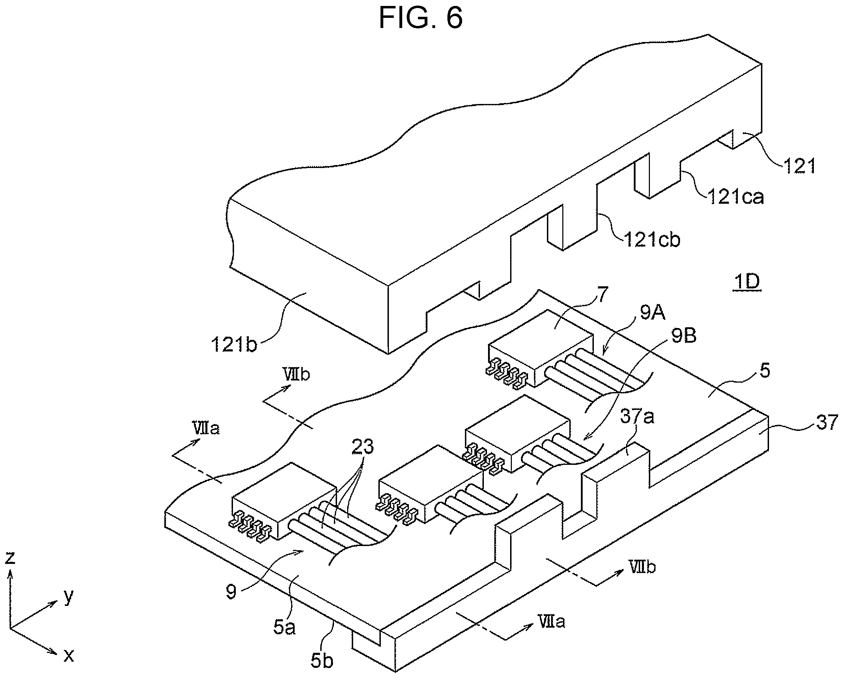

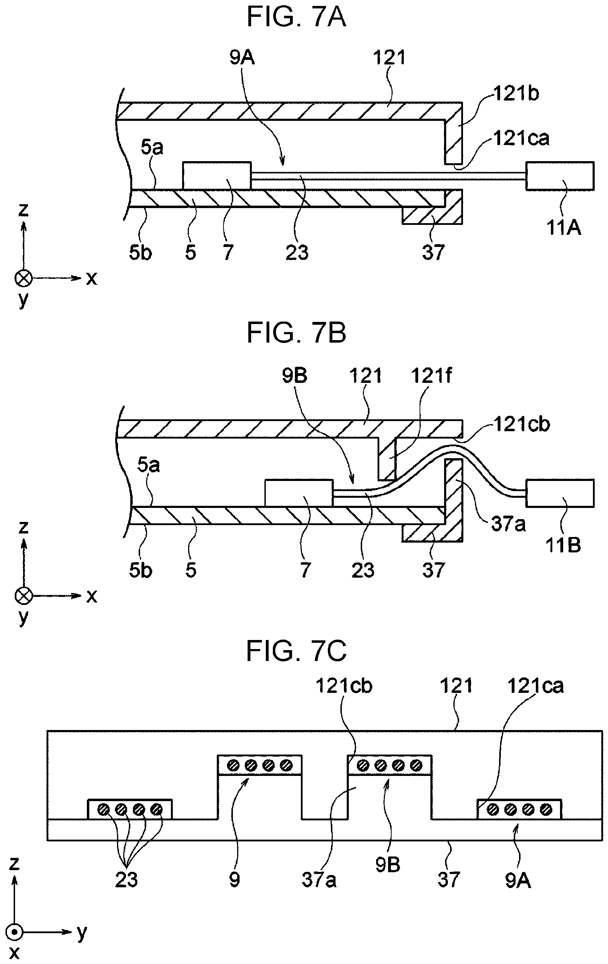

FIG. 6 is an exploded perspective view illustrating part of an optical module 1D according to another example. FIG. 7A is a cross-sectional view taken along line VIIa-VIIa in FIG. 6. FIG. 7B is a cross-sectional view taken along line VIIb-VIIb line in FIG. 6. FIG. 7C is a side view of the optical module 1D seen from the +x side (but the fiber bundle 9 is illustrated in cross-section).

As illustrated in FIG. 6, in the description here, the arrangement illustrated in FIG. 4A is taken as an example of the arrangement of the multiple optical ICs 7. However, the arrangement of the multiple optical ICs 7 may be another arrangement. A cooling component 121 of the optical module 1D may include multiple fins 21d (or multiple pins) and convex portions 25, similarly to the cooling component 21. However, the illustration of such parts is omitted here.

In the following description, for convenience, the fiber bundles 9 extending out from the optical ICs 7 located relatively on the -x side may be referred to as first fiber bundles 9A. The fiber bundles 9 extending out from the optical ICs 7 located relatively on the +x side may be referred to as second fiber bundles 9B. The optical connectors 11 provided on the first fiber bundles 9A may be referred to as first optical connectors 11A. The optical connectors 11 provided on the second fiber bundles 9B may be referred to as second optical connectors 11B.

As illustrated in FIG. 7A, each first fiber bundle 9A, for example, extends from the corresponding optical IC 7 in a generally straight line to the edge of the module substrate 5 on the +x side. On the other hand, as illustrated in FIG. 7B, each second fiber bundle 9B is bent partway therealong and extends to the end of the module substrate 5 on the +x side (in planar perspective view). In other words, the second fiber bundle 9B more greatly deviates from a straight line shape than the first fiber bundle 9A, and thus the difference in length from the optical IC 7 to the edge of the module substrate 5 between the two bundles is less than the difference between the positions in the x direction (positions of side surfaces on +x side) of the optical ICs 7 to which the bundles are connected.

The above difference between the paths of the fiber bundles 9 may be realized via bending in any direction, and in the illustrated example, is realized via bending in the z direction. The number of bends may be any number. From another perspective, the number of positions at which the cooling component 121 regulates the paths of the fiber bundles 9 may be freely chosen. In the illustrated example, the first fiber bundle 9A extends in a straight line, but the first fiber bundle 9A may also be bent at an appropriate position. From another perspective, the cooling component 121 may only regulate the length by which the second fiber bundles 9B extend out from the module substrate 5, or additionally, may regulate the length by which the first fiber bundles 9A extend out from the module substrate 5.

Various configurations for allowing the cooling component 121 to regulate (restrict) at least part of the path of at least some of the fiber bundles 9 can be adopted. The illustrated example is configured as follows.

As illustrated in FIG. 6, the cooling component 121 includes four wall portions 121b, similarly to the cooling component 21. Cut outs (121ca and 121cb) are formed in the wall portion 121b on the +x side to allow the fiber bundles 9 to extend out of the cooling component 121. The cut outs 121cb corresponding to the second fiber bundles 9B are cut out through the wall portion 121b so as to be deeper (longer in the z direction) than the cut outs 121ca corresponding to the first fiber bundles 9A. The optical module 1D also includes an auxiliary member 37 fixed to the module substrate 5. The auxiliary member 37 includes convex portions 37a that protrude from the first mounting surface 5a of the module substrate 5 toward the +z side and are to be inserted into parts of the cut outs 121cb on the -z side.

Therefore, when the cooling component 121 is attached to the module substrate 5, as illustrated in FIG. 7C, opening are formed at the height of the first mounting surface 5a that allow the first fiber bundles 9A to pass therethrough, and openings are formed that allow the second fiber bundles 9B to pass therethrough, these openings being formed further toward the +z side than the former openings. Both sets of openings are, for example, equivalent in shape and size to each other. The auxiliary member 37 may be regarded as a part of the cooling component 121 or as a separate member from the cooling component 121. For convenience, the following description is based on the latter assumption. In either case, the cooling component 121 functions as a regulating member that restricts the paths of the fiber bundles 9.

As illustrated in FIG. 7B, the cooling component 121 includes a convex portion 121f protruding from the surface facing the first mounting surface 5a toward the -z side. The convex portion 121f contacts part of the second fiber bundle 9B that extends from the optical IC 7 to the cut out 121cb from the +z side so as to restrict the path of the second fiber bundle 9B. Accordingly, the second fiber bundle 9B bends toward the +z side at the position of the convex portion 121f and extends into the cut out 121cb.

As illustrated in FIG. 7A, let us assume a situation in which the first optical connector 11A is positioned toward the +x side to the maximum extent. Furthermore, as illustrated in FIG. 7B, let us assume a situation in which the second optical connector 11B is positioned toward the +x side to the maximum extent provided that the z-direction position of the second optical connector 11B is aligned with the z-direction position of the first optical connector 11A. In this case, the x-direction position of the first optical connector 11A and the x-direction position of the second optical connector 11B may, for example, be roughly aligned. For example, the difference between the optical connectors may be less than or equal to 1/3 or less than or equal to 1/5 of the difference between the x-direction positions of the optical IC 7 on the -x side and the optical IC 7 on the +x side.

Let us assume a situation in which each of the first optical connector 11A and the second optical connector 11B are both positioned towards the +x side to the maximum extent. In other words, unlike in FIG. 7B, let us assume a situation in which the second fiber bundle 9B is made to extend parallel to the x direction from the position of the opening formed by the cut out 121cb. In this case, the difference between the x-direction position of the first optical connector 11A and the x-direction position of the second optical connector 11B is smaller than, for example, the difference between the x-direction positions of the optical IC 7 on the - x side and the optical IC 7 on the +x side. The length by which the fiber bundle 9 extends out from the +x-side edge of the module substrate 5 in the situation assumed here is an example of an extension length described below.

Unlike in the illustrated example, the positions in the z direction when the first fiber bundle 9A and the second fiber bundle 9B extend out from the +x-side edge of the module substrate 5 (extending out from the cut outs in the cooling component 121) may be the same for the first fiber bundle 9A and the second fiber bundle 9B. In other words, the length by which the second fiber bundle 9B extends out from the +x-side edge of the module substrate 5 may be adjusted by forming convex portions on the -z-side surface of the cooling component 21 and/or the first mounting surface 5a as appropriate while keeping the shape and size of the cut outs 121ca and 121cb identical.

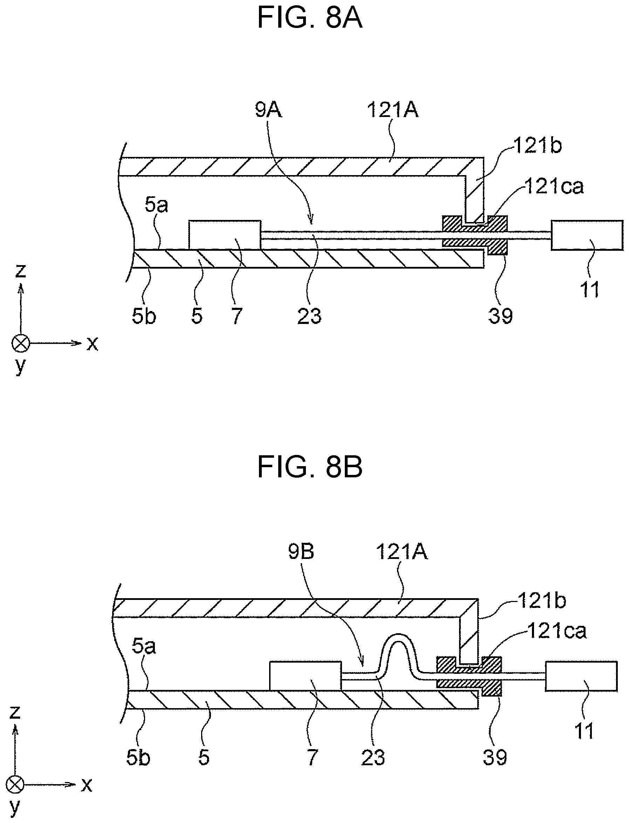

FIGs. 8A and 8B correspond to FIGs. 7A and 7B and illustrate yet another example.

In a cooling component 121A in this example, the cut outs that the first fiber bundle 9A and the second fiber bundle 9B extend through are the cut outs 121ca illustrated in FIG. 6. In other words, the first fiber bundle 9A and the second fiber bundle 9B pass through openings at the same height as each other. Each of the first fiber bundle 9A and the second fiber bundle 9B is provided with a stopper 39. The length of the fiber bundle 9 from the optical connector 11 to the stopper 39 is identical for the first fiber bundle 9A and the second fiber bundle 9B. The position of the stopper 39 in the x direction is restricted by the opening formed by the cut out 121ca. The cooling component 121 may regulate part of the path of the fiber bundle 9 in this manner.

As described above, the optical module 1D may include a regulating member (cooling component 121 and auxiliary member 37) that regulates the path of at least part of at least one fiber bundle 9 among the multiple fiber bundles 9. The multiple optical ICs 7 may include a first optical IC (optical IC 7 on the -x side) and a second optical IC (optical IC 7 on the +x side) located further toward the first side (the side from which the fiber bundle 9 extends. +x side) than the first optical IC. The multiple fiber bundles 9 may include a first fiber bundle 9A extending out from the -x-side optical IC 7 and a second fiber bundle 9B extending out from the +x-side optical IC 7. The length of each fiber bundle 9 from the corresponding optical IC 7 to the corresponding optical connector 11 will be referred to as a total length. The length by which each fiber bundle 9 can extend out toward the +x side parallel to the first direction (x direction) from the +x side edge of the module substrate 5 will be referred to as an extension length. The first fiber bundle 9A and the second fiber bundle 9B may have the same total length as each other. The regulating member (cooling component 121 and auxiliary member 37) may regulate the path of at least part of at least the second fiber bundle 9B so that the difference between the extension length of the first fiber bundle 9A and the extension length of the second fiber bundle 9B is smaller than the difference between the positions in the x direction of the optical IC 7 on the -x side and the optical IC 7 on the +x side.

In this case, for example, as already described above, in a mode where the positions of the optical ICs 7 in the x direction are different from each other and the lengths of the fiber bundles 9 are identical to each other, the difference between the positions of the optical connectors 11 can be reduced and convenience is improved. From another perspective, the need to make the lengths of the multiple fiber bundles 9 different from each other in order to make the positions of the optical connectors 11 identical to each other (such a mode is also included in the technology according to the present disclosure) is reduced. As a result, for example, the configurations of the multiple fiber bundles 9, etc. can be made identical to each other and productivity can be improved.

The above-mentioned regulating member may be in contact with the multiple optical ICs 7 and may cool the multiple optical ICs 7. In other words, at least part of regulating member may consist of the cooling component 121.

In this case, for example, the cooling component 121 also serves as the regulating member, and as a result, the optical module 1D is simplified, and this in turn, results in a reduction in size.

The technology according to present disclosure is not limited to the above embodiment and different examples, and may be implemented in various modes.

For example, not only a fiber bundle but also wiring for transmitting electrical signals may extend out from the optical ICs. In this case, separate connectors may be provided for the fiber bundles and wiring, or shared connectors may be provided. In other words, for the latter case, an optical connector may also serve as an electrical connector. The cooling component may be a Peltier element rather than a heat sink.

Different concepts can be extracted from present disclosure than the concept of mounting multiple optical ICs, at least one control IC, at least one power supply IC, and an electrical connector together on a module substrate. For example, techniques for shifting the positions of multiple optical ICs from each other in the second direction or adjusting the lengths of multiple fiber bundles by means of a cooling component do not need to be premised on the requirement that the control IC and power supply IC are mounted on a module substrate together with the optical ICs.

### REFERENCE SIGNS

1 optical module, 3 motherboard (external electronic device), 5 module substrate, 5a first mounting surface (first surface), 7 optical IC, 9 fiber bundle, 11 optical connector, 13 control IC, 15 power supply IC, 17 electrical connector, 23 optical fiber.

## Claims

1. An optical module comprising:
a module substrate having a first surface that extends in a first direction and a second direction perpendicular to the first direction;
multiple optical ICs mounted on the first surface at different positions from each other in the first direction and configured to perform photoelectric conversion;
multiple fiber bundles each including multiple optical fibers extending in parallel with each other, each of the fiber bundles extending out from a corresponding one of the multiple optical ICs toward a first side in the second direction;
multiple optical connectors located at opposite ends of the multiple fiber bundles from the multiple optical ICs, connected to external optical elements, and configured to allow transmission of optical signals;
at least one control IC mounted on the module substrate and configured to control at least one of the multiple optical ICs; and
at least one power supply IC mounted on the module substrate and configured to supply power to at least one of the multiple optical ICs.

2. The optical module according to claim 1, wherein, among the multiple optical ICs, at least one optical IC is displaced in the second direction with respect to one or two optical ICs that are adjacent thereto in order of arrangement in the first direction.

3. The optical module according to claim 2, wherein the at least one optical IC does not overlap the adjacent one or two optical ICs in terms of an arrangement range in the second direction, but does partially overlap the adjacent one or two optical ICs in terms of an arrangement range in the first direction.

4. The optical module according to any one of claims 1 to 3, wherein the at least one control IC includes only one control IC, and
the one control IC is configured to control the multiple optical ICs.

5. The optical module according to any one of claims 1 to 4, wherein the at least one power supply IC includes only one power supply IC, and
the one power supply IC is configured to supply power to the multiple optical ICs.

6. The optical module according to any one of claims 1 to 4, wherein the at least one power supply IC includes two or more power supply ICs, and
the two or more power supply ICs are configured to supply powers of different voltages from each other and are configured to each supply power to the multiple optical ICs.

7. The optical module according to any one of claims 1 to 6, further comprising:
a cooling component that is in direct or indirect contact with the multiple optical ICs and the module substrate and is configured to cool the multiple optical ICs and the module substrate.

8. The optical module according to any one of claims 1 to 7, further comprising:
a regulating member configured to regulate a path of at least part of at least one fiber bundle among the multiple fiber bundles,
wherein the multiple optical ICs include
a first optical IC, and
a second optical IC is located toward the first side relative to the first optical IC,
the multiple fiber bundles include
a first fiber bundle extending from the first optical IC, and
a second fiber bundle extending from the second optical IC,
when a length of each of the fiber bundles from the corresponding optical IC to the corresponding optical connector is called a total length, and a length by which each fiber bundle can extend out parallel to the second direction from an edge, on the first side, of the module substrate is called an extension length,
the first fiber bundle and the second fiber bundle have identical total lengths, and
the regulating member is configured to regulate a path of at least part of at least the second fiber bundle and make a difference between the extension length of the first fiber bundle and the extension length of the second fiber bundle smaller than a difference between positions of the first optical IC and the second optical IC in the first direction.

9. The optical module according to claim 8, wherein the regulating member is in contact with the multiple optical ICs and is configured to cool the multiple optical ICs.

10. An optical communication device comprising:
the optical module according to any one of claims 1 to 9, and
a motherboard electrically connected to the optical module.
